# FASCICULE DE BREVET EUROPEEN

(11) **EP 2 084 570 B1**
(45) Date de publication et mention de la délivrance du brevet: **06.06.2012**
(21) Numéro de dépôt: 07823536.3
(22) Date de dépôt: 03.07.2007
(51) Int. Cl.: G02C 13/00

(54) **PROCEDE ET DISPOSITIF DE MESURE DU GALBE D'UNE MONTURE DE LUNETTES**
VERFAHREN UND EINRICHTUNG ZUR MESSUNG DER KURVE EINES BRILLENRAHMENS
METHOD AND DEVICE FOR MEASURING THE CURVE OF A SPECTACLE FRAME

(30) Priorité: 06.07.2006 FR 0606164
(43) Date de publication de la demande: 05.08.2009
(73) Titulaire: ACEP France, 75008 Paris (FR)
(72) Inventeur: SAYAG, Jean-Philippe, F-75016 Paris (FR)
(74) Mandataire: Oudin, Stéphane
(86) Numéro de dépôt international: PCT/FR2007/051580
(87) Numéro de publication internationale: WO 2008/003897

(56) Documents cités:
- EP-A1- 0 689 900
- EP-A1- 1 316 837
- US-A1- 2002 053 143

## Description

La présente invention concerne un procédé et un dispositif de mesure du galbe d'une monture de lunettes.

Jusqu'à récemment, les verres de lunettes étaient usinés sans prendre en compte le galbe de la monture de lunettes. Il en résultait une distorsion de la vision dans la partie périphérique du verre, c'est-à-dire à l'extrême droite pour le verre droit et à l'extrême gauche pour le verre gauche.

Les techniques de fabrication des verres de lunettes se sont affinées et permettent maintenant de tenir compte du galbe de la monture. Ceci permet d'offrir au porteur de lunettes une vision plus précise dans les zones périphériques.

Cependant, la mesure du galbe d'une monture selon l'état de la technique est encore imparfaite.

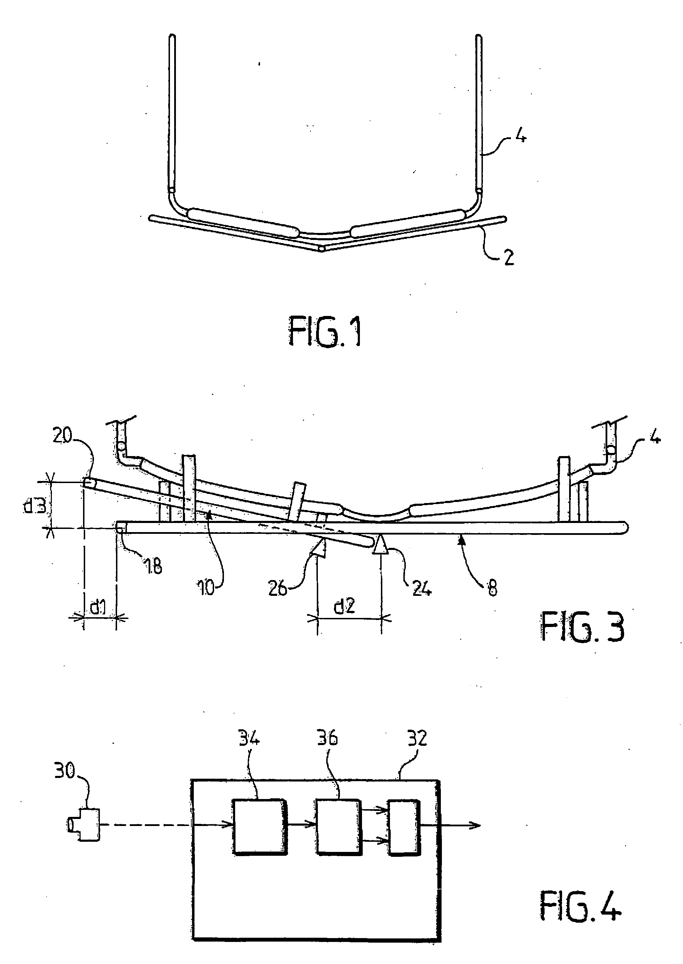

On a représenté schématiquement sur la figure 1 un tel moyen de mesure connu. Il se présente sous la forme d'un compas 2 que l'opticien applique contre la monture de lunettes 4 pour en déterminer le galbe. On conçoit qu'une telle mesure présente des inconvénients. Il est tout d'abord nécessaire de former l'opticien à une telle mesure. De plus, s'agissant d'une mesure faisant intervenir une personne, celle-ci n'est pas fiable (c'est-à-dire non reproductible). Enfin, cette mesure requiert un temps non négligeable.

Le document EP1316837 décrit un dispositif de mesure du galbe d'une monture de lunettes, où une base est appuyée contre le front du porteur, et deux bras pivotants ajustables contre les lunettes indiquent l'inclination de la monture.

L'invention a pour but de remédier aux inconvénients de l'art antérieur.

L'invention peut être utilisée dans un procédé de mesure du galbe d'une monture de lunettes comprenant les opérations consistant à :
- déterminer la position d'un premier repère définissant le plan moyen de la monture de lunettes,
- déterminer la position d'un deuxième repère définissant l'orientation d'un support de verre de lunettes par rapport audit plan moyen, et
- mesurer l'angle entre lesdits premier et deuxième repères, cet angle définissant le galbe de la monture de lunettes.

L'invention a pour objet un dispositif de mesure du galbe d'une monture comme dans la revendication 1.

De manière avantageuse, les premier et deuxième éléments positionneurs sont ajustés sur la monture de lunettes et sont pivotants l'un par rapport à l'autre.

Le dispositif selon l'invention comprend en outre des moyens de détermination de l'angle formé par lesdits premier et deuxième repères lorsque les premier et deuxième éléments positionneurs sont ajustés sur une monture de lunettes.

Ces moyens de détermination comprennent de préférence des moyens de saisie d'image, telle qu'une caméra, et des moyens numériques d'analyse d'image.

On décrira ci-après, à titre d'exemple non limitatif, une forme d'exécution de la présente invention, en référence au dessin annexé sur lequel :
- la figure 1, déjà décrite, est une vue de dessus qui illustre la mesure du galbe d'une monture de lunettes selon l'art antérieur,
- les figures 2a et 2b représentent respectivement en vue de face et en vue de dessus une monture de lunettes sur laquelle est monté un dispositif de mesure du galbe selon un premier mode de réalisation de l'invention,
- la figure 3 illustre de manière non limitative quelques paramètres qui peuvent être utilisés pour déterminer la galbe d'une monture de lunettes, et
- la figure 4 illustre schématiquement un dispositif de mesure conforme à l'invention.

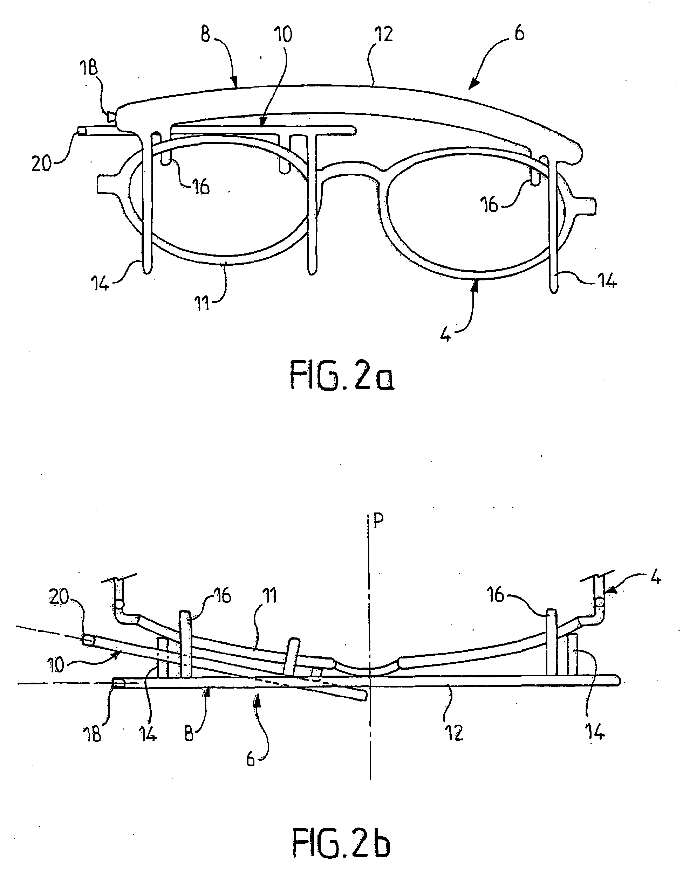

Sur la monture de lunettes 4 représenté sur les figures 2a et 2b, on a ajusté un dispositif 6 selon l'invention. Ce dispositif comporte un premier élément positionneur 8 et un deuxième élément positionneur 10. Le premier élément positionneur 8 se présente sous la forme d'un pont 12 sensiblement horizontal dont les extrémités sont chacune pourvues d'une première branche 14 contre laquelle la face antérieure de la monture de lunettes vient en appui et une deuxième branche 16 qui s'appuie sur la face postérieure de la monture de lunettes.

Le premier élément positionneur 8 est muni d'au moins un repère 18 dont la position est utilisée lors de la mesure du galbe, cette position permettant de définir le plan moyen de la monture. Par plan moyen, on entend un plan vertical perpendiculaire au plan de symétrie P de la monture de lunettes. Dans le mode de réalisation représenté, le repère 18 est disposé à une extrémité du pont 12. Il pourrait aussi être placé en un autre endroit, et par exemple au centre du pont 12 tel que le repère 24 sur la figure 3).

Le dispositif 6 comprend un deuxième élément positionneur 10. Celui-ci est destiné à permettre de déterminer l'orientation du support de verre 11 par rapport au plan moyen de la monture.

Ce deuxième élément positionneur 10 est ajusté sur l'un des deux supports de verre de la monture. Il comporte un repère 20 dont la position est fonction de la courbure de la monture de lunettes. Dans le mode de réalisation représenté, ce repère 20 est placé à une extrémité du deuxième élément positionneur 10. Il est dans l'exemple représenté monté pivotant sur le premier élément positionneur 8 par l'intermédiaire d'un pivot 22 prévu sur l'une des premières branches 14 du premier élément positionneur 8.

Connaissant les positions relatives des deux repères, on peut déterminer aisément le galbe de la monture. La figure 3 montre quelques exemples de paramètres à partir desquels on peut déterminer le galbe.

Les moyens de détermination sont de préférence automatisés et comprennent comme représenté à titre d'exemple sur la figure 4 l'utilisation d'un moyen de saisie d'image 30, par exemple une caméra, et un moyen numérique d'analyse d'image 32. Ce moyen 32 comprend un module de stockage 34 pour recevoir une image saisie et un module de traitement 36 pour calculer, à partir de la position des repères dans l'image saisie, le galbe de la monture de lunettes.

On notera que la mesure du galbe est faite sans que le patient ai besoin de porter la monture. Ainsi, le praticien peut positionner la monture de lunettes de manière précise et reproductible par rapport au moyen de saisie d'image. La distance et l'orientation des éléments positionneurs par rapport au moyen de saisie d'image est ainsi parfaitement connue. Par conséquent, la position relative des premier et deuxième repères permet au module de traitement d'image de déterminer le galbe de la monture.

On pourra ainsi par exemple placer la monture de lunettes avec sa face avant du côté du moyen de saisie d'image. Sur l'image frontale saisie, la distance apparente d1 entre les repères 18 et 20 est directement liée au galbe de la monture de lunettes. Avec la monture de lunettes dans la même position, on pourrait aussi mesurer le galbe en mesurant la distance apparente d2 entre un premier repère 24 placé au centre du premier élément positionneur 8, et sur sa face avant, et un deuxième repère 26 placé lui aussi sur la face avant du deuxième élément positionneur 10.

La mesure du galbe de la monture de lunettes pourrait également être effectuée en la plaçant de sorte qu'une branche de la monture soit face au moyen de saisie d'image. La mesure de la distance apparente d3 entre les repères 18 et 20 détermine le galbe de la monture de lunettes.

Il convient de noter que les repères peuvent être de forme, de texture, de couleur très diverses. Il importe seulement de les choisir de manière qu'il puisse être facilement détecté par le moyen de traitement d'image.

En particulier, il peut être avantageux de prévoir des repères de forme conique (repères 24 et 26) dont la base est destinée à être tournée vers le moyen de saisie d'image. L'ovalisation de la base sphérique du repère 26 telle que vue par le moyen de saisie d'image permet d'affiner la mesure du galbe.

Dans les modes de réalisation représentés, les repères sont sur des éléments positionneurs qui sont ajustables de manière amovible sur la monture de lunettes.

De tels éléments positionneurs peuvent être utilisés avec pratiquement n'importe quelle monture de lunettes.

On pourrait aussi prévoir que les repères soient fixés sur la paire de lunettes ou en fasse partie intégrante, par exemple sous forme d'éléments géométriques (cercle, triangle,...) à but premier décoratif.

## Revendications

1. Dispositif de mesure du galbe d'une monture de lunettes (4), ledit dispositif comprenant un premier élément positionneur (8) muni d'un premier repère , ajustable sur une monture de lunettes pour définir un plan moyen de ladite monture de lunettes, et un deuxième élément positionneur (10) muni d'un deuxième repère, ajustable sur la monture de lunettes, pour définir une orientation d'un support de verre de lunettes, **caractérisé en ce que**: le premier élement positionneur (8) se présente sous la forme d'un pont (12) sensiblement horizontal dont les extrémités sont chacune pourvues d'une première branche (14) destinée à venir en appui contre la face antérieure de la monture de lunettes et d'une deuxième branche (16) qui est destinée s'appuyer sur la face postérieure de la monture de lunettes.

2. Dispositif selon la revendication 1 **caractérisé en ce que** les premier et deuxième éléments positionneurs (8, 10) sont montés pivotants entre eux.

3. Dispositif selon l'une quelconque des revendications 1 à 2, **caractérisé en ce qu'**il comprend en outre des moyens de détermination de l'angle formé par lesdits premier et deuxième repères lorsque les premier et deuxième éléments positionneurs (8,10) sont ajustés sur une monture de lunettes.

4. Dispositif selon la revendication 3 **caractérisé en ce que** lesdits moyens de détermination comprennent des moyens de saisie d'image et des moyens numérique d'analyse d'image.

## Claims

1. A device for measuring the curve of a spectacle frame (4), said device comprising a first positioning element (8), adjustable on a spectacle frame, provided with a first mark, in order to define a mean plane of said spectacle frame, and a second positioning element (10), adjustable on a spectacle frame, provided with a second mark, in order to define an orientation of a spectacle lens support, **characterized in that**:
the first positioning element (8) appears as a substantially horizontal bridge (12), the ends of which are each provided with a first branch (14) intended to bear against the front face of the spectacle frame and with a second branch (16) which is intended to bear upon the rear face of the spectacle frame.

2. The device according to claim 1, **characterized in that** the first and second positioning elements (8, 10) are pivotally mounted together.

3. The device according to any of claims 1 to 2, **characterized in that** it further comprises means for determining the angle formed by said first and second marks when the first and second positioning elements (8, 10) are adjusted on a spectacle frame.

4. The device according to claim 3, **characterized in that** said the determination means comprise means for capturing an image and digital means for image analysis.

## Patentansprüche

1. Vorrichtung zum Messen der Rundbiegung einer Brillenfassung (4), wobei die Vorrichtung ein erstes, mit einem ersten Bezugszeichen ausgestattetes Positionierelement (8), das auf einer Brillenfassung justierbar ist, um eine mittlere Ebene der Brillenfassung zu bestimmen, und ein zweites, mit einem zweiten Bezugszeichen ausgestattetes Positionierelement (10), das auf der Brillenfassung justierbar ist, um eine Ausrichtung eines Brillenglashalters zu bestimmen, umfasst, **dadurch gekennzeichnet, dass** sich das erste Positionierelement (8) in Form einer etwa horizontalen Brücke (12) darstellt, deren Enden jeweils mit einem ersten Arm (14), der dazu bestimmt ist, sich auf der Vorderseite der Brillenfassung abzustützen, und einem zweiten Arm (16), der dazu bestimmt ist, sich auf der Rückseite der Brillenfassung abzustützen, ausgestattet sind.

2. Vorrichtung nach Anspruch 1, **dadurch gekennzeichnet, dass** das erste und zweite Positionierelement (8, 10) untereinander schwenkbar montiert sind.

3. Vorrichtung nach einem der Ansprüche 1 bis 2, **dadurch gekennzeichnet, dass** sie ferner Bestimmungsmittel des Winkels umfasst, der von dem ersten und zweiten Bezugszeichen gebildet wird, wenn das erste und zweite Positionierelement (8, 10) auf einer Brillenfassung justiert sind.

4. Vorrichtung nach Anspruch 3, **dadurch gekennzeichnet, dass** die Bestimmungsmittel Mittel zur Bilderfassung und digitale Mittel zur Bildanalyse umfassen.
